Europäisches Patentamt

European Patent Office

Office européen des brevets

(19)

(11) Veröffentlichungsnummer: **0 118 725 B1**

(12) **EUROPÄISCHE PATENTSCHRIFT**

(45) Veröffentlichungstag der Patentschrift: 08.01.92

(51) Int. Cl.⁵: **C08G 18/76**, C08G 18/79

(21) Anmeldenummer: 84101036.6

(22) Anmeldetag: 02.02.84

(54) Flüssige, Isocyanuratgruppen enthaltende Polyisocyanatmischungen aus 4,4'- und 2,4'-Diphenylmethan-diisocyanaten, Verfahren zu deren Herstellung und deren Verwendung für Polyurethan- oder Polyisocyanurat-Kunststoffe.

(30) Priorität: 12.02.83 DE 3304889

(43) Veröffentlichungstag der Anmeldung:
19.09.84 Patentblatt 84/38

(45) Bekanntmachung des Hinweises auf die
Patenterteilung:
08.01.92 Patentblatt 92/02

(84) Benannte Vertragsstaaten:
AT BE CH DE FR GB IT LI NL SE

(56) Entgegenhaltungen:
EP-A- 0 051 239          EP-A- 0 081 710
DE-A- 2 525 017          DE-A- 2 616 415
DE-A- 2 616 416          FR-A- 2 391 236
US-A- 3 960 788

H.J. Diehr, Kunststoffe 62 (1972) 731

Developments in Polyurethane-1, 178-183,
Applied Science PublishersLtd, London 1978

(73) Patentinhaber: BASF Aktiengesellschaft
Carl-Bosch-Strasse 38
W-6700 Ludwigshafen(DE)

(72) Erfinder: Schleier, Gisbert, Dr.
Bismarckstrasse 74
W-6700 Ludwigshafen(DE)
Erfinder: Marx, Matthias, Dr.
Seebacher Strasse 49
W-6702 Bad Duerkheim(DE)
Erfinder: Nissen, Dietmar, Dr.
Ziegelhaeuser Landstrasse 31
W-6900 Heidelberg(DE)
Erfinder: Frank, Wolfram, Dr.
Bergstrasse 162
W-6900 Heidelberg(DE)
Erfinder: Gehm, Robert, Dr.
Mannheimer Strasse 45
W-6703 Limburgerhof(DE)

**Beschreibung**

Es ist bekannt, daß organische Isocyanate mit Hilfe von Katalysatoren zu Isocyanuraten trimerisiert werden können.

In der vorliegenden Literatur, beispielsweise in "High Polymers", Band XVI "Polyurethane, Chemistry and Technology" Teil I, von J.H. Saunders and K.C. Frisch (Verlag Interscience Publishers, New York, London 1962, Seiten 94 ff), werden zahlreiche Katalysatoren für die Cyclisierung und Polymerisation beschrieben. Als Beispiele seien genannt: starke Basen, wie quaternäre Ammoniumhydroxide, beispielsweise Benzyltrimethylammoniumhydroxid, Alkalimetallhydroxide, beispielsweise Natrium- oder Kaliumhydroxid, Alkalimetallalkoxide, beispielsweise Natriummethylat und Kaliumisopropylat, Trialkylphosphine, beispielsweise Triethylphosphin, Alkylaminoalkylphenole, beispielsweise 2,4,6-Tris-(dimethylaminomethyl)-phenol 3- und/oder 4-substituierte Pyridine, beispielsweise 3- oder 4-Methylpyri-din, metallorganische Salze, beispielsweise Tetrakis(hydroxyethyl)-natriumborat, Friedel-Crafts-Katalysatoren, beispielsweise Aluminiumchlorid, Eisen-(III)chlorid, Borfluorid und Zinkchlorid und Alkalimetallsalze von schwachen organischen Säuren und Nitrophenolaten, beispielsweise Kaliumoctoat, Kalium-2-ethyl-hexoat, Kaliumbenzoat, Natriumpikrat und Phthalimidkalium.

Besonderes technisches Interesse beansprucht in diesem Zusammenhang die Polymerisation von organischen Polyisocyanaten zu Polymerisationsprodukten mit Isocyanuratstruktur und freien NCO-Gruppen. Hierbei ist es notwendig, die Isocyanuratbildung nach Erreichen des gewünschten Tri- bzw. Polymerisationsgrades abzustoppen. Dies gelingt u.a. durch Zersetzung oder Neutralisation der Katalysatoren. So können beispielsweise basische Katalysatoren durch Säuren, wie Salzsäure, neutralisiert werden.

Zur Polymerisation von aromatischen Polyisocyanaten haben sich nach Angaben der US-PS 2 993 870 verschiedene Triazinderivate als Katalysatoren sehr gut bewährt. Nachteilig an diesen Katalysatoren ist einerseits, daß sie bereits bei Raumtemperatur so intensiv wirksam sind, daß man zu Umwegen über anspaltbare, verkappende Gruppen greifen muß, wenn man Polymerisationsprodukte mit Isocyanuratstruktur und freien NCO-Gruppen erhalten will. Andererseits sind jedoch die gleichen Triazinverbindungen zur Polymerisation von aliphatischen Polyisocyanaten nahezu unwirksam.

Zur Überwindung dieses Nachteils werden nach der DE-A-26 16 415 Cokatalysatorsysteme aus 1,3,5-Tris(dimethylaminopropyl)-s-hexahydrotriazin und einer organischen Mono- und/oder Dicarbonsäure verwendet, mit denen aliphatische Diisocyanate oder Mischungen aus aliphatischen und aromatischen Diisocyanaten gleichzeitig, teilweise oder vollständig polymerisiert werden können.

Anlagerungsverbindungen, die aus einem Mol eines 1,3,5-Tris-(N,N-dialkylaminoalkyl)-s-hexahydrotriazins und ungefähr 6 Äquivalenten einer OH-aciden organischen Verbindung mit einem pK-Wert von 3 bis 10 bestehen, sind auch aus der DE-A-26 16 416 bekannt. Die Anlagerungsverbindungen finden z.B. Verwendung als Katalysatoren zur Herstellung von gegebenenfalls schwerentflammbaren, urethangruppenhaltigen Polyisocyanuratschaumstoffen durch Umsetzung von organischen Polyisocyanaten und Polyolen und zur Herstellung von Isocyanuratgruppen aufweisenden Polyisocyanaten aus aliphatischen und/oder aromatischen Polyisocyanaten. Beispielhaft beschrieben wird die quantitative Isocyanuratisierung von 4,4'-Diphenylmethan-diisocyanat zu einem spröden, kompakten, im wesentlichen Isocyanatgruppen freien Kunststoff und die Herstellung eines urethangruppenhaltigen Polyisocyanuratschaumstoffs durch gleichzeitige Polyaddition eines Polyester- oder Polyether-polyols an eine Mischung aus Diphenylmethandiisocyanat-Isomeren und Polyphenyl-polymethylen-polyisocyanaten sowie deren Tri- und Polymerisation.

Die FR-A-2 391 236 (DE-C-27 22 400) betrifft ein Verfahren zur Herstellung von wärmebeständigen, blasenfreien, Isocyanuratgruppen aufweisenden Kunststoffen durch vollständige Polymerisation eines Isomeren- und/oder Homologengemisch des Diphenylmethan-diisocyanats mit einem Gehalt von mehr als 20 Gew.-% an 2,4'-Diphenylmethan-diisocyanaten, gegebenenfalls in Gegenwart von polymerisierbaren, olefinisch ungesättigten Monomeren und/oder Epoxidgruppen aufweisenden organischen Verbindungen.

Urethangruppen aufweisende Polyisocyanuratschaumstoffe werden gemäß US-A-3 960 788 hergestellt durch Polyaddition von Polyether- oder Polyester-polyolen an eine Mischung aus Diphenylmethan-diisocyanaten und Polyphenyl-polymethylen-polyisocyanaten unter gleichzeitiger Trimerisierung der überschüssigen Isocyanatgruppen und Verschäumung. In den letztgenannten Patentschriften nicht erwähnt wird die partielle Trimerisierung von 2,4'- und 4,4'-Diphenylmethan-diisocyanaten zu Isocyanuratgruppen enthaltenden Polyisocyanatmischungen auf MDI-Basis und die Verwendung dieser Quasiprepolymeren zur Herstellung von Polyisocyanatpolyadditionsprodukten.

Derartige Polyisocyanuratschaumstoffe werden auch in der Monographie Developments in Polyurethane 1 von J.M. Buist (Applied Science Publishers Ltd., London, 1978) beschrieben. Nach Angaben dieser Publikation sind aus 4,4'-Diphenylmethan-diisocyanat hergestellte Isocyanuratgruppen enthaltende Schaumstoffe zu spröde und leicht verreibbar und daher technisch wertlos.

2

Die Trimerisierung von aliphatischen, cycloaliphatischen und aromatischen Polyisocyanaten in Gegenwart von Komplexen aus basischen Alkalimetallverbindungen und acyclischen organischen Verbindungen als Katalysatoren werden in der DE-A-31 00 263 (EP 56 159 ) beschrieben. Nach diesem Verfahren werden die Diisocyanate partiell trimerisiert und danach das überschüssige monomere Diisocyanat destillativ abgetrennt. Die erhaltenen Produkte finden bevorzugt Anwendung als Lackbindemittel.

Nach Angaben der DE-A- 25 51 634 (US 4 115 373 ) werden als Katalysatoren Mannich-Basen eingesetzt und die Trimerisierung wird in Gegenwart von inerten Lösungsmitteln bei Temperaturen kleiner als 60 °C durchgeführt. Auch nach dieser Methode muß das Lösungsmittel nach beendeter Trimerisierung aus dem Reaktionsgemisch abgetrennt werden.

Die aufwendige Herstellung von Isocyanuratgruppen enthaltenden Polyisocyanaten nach den genannten Verfahren erfolgte in dem Bestreben aus stark toxischen aliphatischen oder niedrig siedenden aromatischen Diisocyanaten höhermolekulare Polyisocyanate mit niedrigem Dampfdruck zu erhalten. Durch die Trimerisierung ergeben sich zwangsläufig Polyisocyanate mit einer relativ hohen Funktionalität, beispielsweise von drei und mehr.

Polyadditionsreaktionen von polyfunktionellen Verbindungen mit reaktiven Wasserstoffatomen und tri- und/oder höherfunktionellen Polyisocyanaten sind jedoch schwer kontrollierbar und führen vielfach zu spröden und wenig abriebfesten Polyurethanen oder Polyharnstoffen.

Die Aufgabe der vorliegenden Erfindung bestand darin, bei Raumtemperatur flüssige, lagerstabile, gut verarbeitbare Polyisocyanate mit geringem Dampfdruck zu entwickeln, die zu abriebbeständigen, schwer entflammbaren, nahezu farblosen und insbesondere schrumpfarmen zelligen oder kompakten Polyurethan-, Polyisocyanurat- und/oder Polyharnstoffgruppen enthaltenden Kunststoffen verarbeitet werden können.

Gegenstand der Erfindung sind somit bei Raumtemperatur flüssige, Isocyanuratgruppen enthaltende Polyisocyanatmischungen aus Diphenylmethan-diisocyanaten mit einem Isocyanatgehalt von 23 bis 31 Gew.-%, erhalten durch partielle Trimerisierung einer Mischung aus 80 bis 30 Gew.-%, bezogen auf das Gesamtgewicht, 4,4'-Diphenylmethan-diisocyanat und
20 bis 70 Gew.-%, bezogen auf das Gesamtgewicht, 2,4'-Diphenylmethan-diisocyanat
in Gegenwart eines Trimerisierungskatalysators und gegebenenfalls nachfolgender Desaktivierung des Trimerisierungskatalysators.

Es zeigte sich, daß die erfindungsgemäßen Polyisocyanatmischungen nicht nur sehr gut lagerstabil, sondern auch im bevorzugten Bereich des NCO-Gehalts aufgrund ihrer Viskosität gut verarbeitbar sind. Aus den Polyisocyanaten hergestellte zellige und kompakte Polyurethan- oder Polyurethangruppen enthaltende Polyisocyanurat-Kunststoffe sind überraschenderweise im wesentlichen farblos und zeigen praktisch keinen Schrumpf. Auf diese Weise können nahezu weiße Hartschaumstoffe mit guten mechanischen und flammhemmenden Eigenschaften sowie einer niedrigen Rauchgasdichte auf der Grundlage von Diphenylmethan-diisocyanaten erhalten werden. Helle Hartschaumstoffe sind insbesondere erwünscht bei der Kühlschrankisolation und auf dem Sportgerätesektor, z.B. bei Surfbrettern.

Kompakte Polyurethane aus den erfindungsgemäßen Polyisocyanaten zeigen einen deutlich verringerten Abfall der Schlagzähigkeit nach der Temperung bei hohen Temperaturen, z.B. bei 200 °C, wie sie bei der Einbrennlackierung von thermisch getrennten Aluminium-Fensterprofilen mit Pulverlacken üblich sind, und vor allem eine stark erhöhte Wärmeformbeständigkeit.

Wesentlich ist außerdem, daß die Reaktionsführung bei der Herstellung von Isocyanuratgruppen enthaltenden Polyurethanschaumstoffen leichter kontrolliert werden kann. Im Vergleich zu Isocyanuratgruppen enthaltenden Polyurethanschaumstoffen aus Mischungen von Diphenylmethan-diisocyanaten und Polyphenyl-polymethylen-polyisocyanaten - im folgenden roh-MDI genannt - härten die erfindungsgemäßen Polyisocyanate in vergleichbaren Zeiträumen vollständig durch.

Durch den Grad der Trimerisierung und den Gehalt an Isocyanuratgruppen kann die Funktionalität der Polyisocyanatmischung in weiten Grenzen eingestellt werden. Auf diese Weise ergibt sich eine größere Variationsmöglichkeit zur Einstellung gewünschter mechanischer Eigenschaften, wie z.B. Abrieb, Schrumpf, Wärmeformbeständigkeit, Flammbeständigkeit u.a., im Endprodukt.

Zu den für die erfindungsgemäßen Polyisocyanatmischungen verwendbaren Ausgangskomponenten und Hilfsmitteln ist folgendes auszuführen:
Als Diphenylmethan-diisocyanate werden Mischungen partiell trimerisiert, die enthalten:
80 bis 30 Gew.-%, vorzugsweise 60 bis 40 Gew.-% und insbesondere 55 bis 45 Gew.-% 4,4'-Diphenylmethan-diisocyanat und
20 bis 70 Gew.-%, vorzugsweise 40 bis 60 Gew.-% und insbesondere 45 bis 55 Gew.-% 2,4'-Diphenylmethan-diisocyanat, wobei die Gew.-% bezogen sind auf das Gesamtgewicht von 4,4'- und 2,4'-Diphenylmethan-diisocyanat.

Geeignet sind jedoch auch Mischungen, die bezogen auf das Gewicht an 4,4'- und 2,4'-Diphenylmethan-diisocyanaten zusätzlich 2,2'-Diphenylmethan-diisocyanat in einer Menge von maximal 5 Gew.-%, vorzugsweise von weniger als 2 Gew.-% enthalten. Derartige Diphenylmethan-diisocyanatmischungen können durch Phosgenierung von Diphenylmethan-diaminen oder durch vollständiges oder teilweises Abdestillieren der Diphenylmethan-diisocyanat-Fraktion aus roh-MDI gewonnen werden.

Als Trimerisierungskatalysatoren kommen beispielsweise in Betracht: Alkali- oder Erdalkalihydroxide, starke organische Basen, wie z.B. Mannich-Basen und 1,3,5-Tris-(N,N-dialkylaminoalkyl)-s-hexahydrotriazine,tertiäre Amine, z.B. Triethylamin, basische Salze von organischen Carbonsäuren, z.B. Kaliumacetat, Friedel Crafts Katalysatoren, Alkalimetalloxide, -alkoholate, -phenolate und -carbonate, Oniumverbindungen von Stickstoff, Phosphor und Schwefel und monosubstituierte Monocarbaminsäureester. Vorzugsweise Anwendung finden 1,3,5-Tris-(N,N-dimethylaminopropyl)-s-hexahydrotriazin, Cokatalysatorsysteme aus 1,3,5-Tris-(N,N-dialkylaminoalkyl)-s-hexahydrotriazinen und organischen Mono- und/oder Dicarbonsäuren, 2,4,6-Tris-(dimethylaminomethyl)phenole, ortho- und/oder para-Dimethylaminomethyl-phenol und Addukte aus einem Mol 1,3,5-Tris-(dialkylaminoalkyl)-s-hexahydrotriazin, einem Mol Alkylenoxid, vorzugsweise Ethylen- oder 1,2-Propylenoxid und einem Mol einer aliphatischen oder aromatischen Carbonsäure. Besonders bewährt hat sich als Trimerisierungskatalysator und daher insbesondere eingesetzt wird ein Addukt aus 1,3,5-Tris-(dimethylaminopropyl)-s-hexahydrotriazin, 1,2-Propylenoxid und 2-Ethylhexansäure. Vorteilhaft bei Verwendung dieses Addukts ist, daß der Katalysator nach beendeter Trimerisierung nicht desaktiviert werden muß, sofern die Umsetzung bei Temperaturen von 25 bis 100 °C durchgeführt wird. Die benötigte Katalysatormenge richtet sich hierbei nach dem gewünschten Isocyanatgehalt der Polyisocyanatmischung und dem Gehalt an leicht hydrolysierbarem Chlor in der Diphenylmethan-diisocyanatmischung. Die Trimerisierungskatalysatoren werden zweckmäßigerweise in Mengen von 0,005 bis 1,0 Gew.-Teilen, vorzugsweise 0,01 bis 0,1 Gew.-Teilen der pro 100 Gew.-Teile der Mischung aus 4,4'- und 2,4'-Diphenylmethan-diisocyanat verwendet.

Nach Erreichen des gewünschten Isocyanatgehaltes wird die Trimerisierung abgestoppt. Sofern sich der Trimerisierungskatalysator unter den angewandten Reaktionsbedingungen nicht langsam zersetzt, so daß seine Endkonzentration nahezu gleich null wird, oder bei Raumtemperatur seine Aktivität verliert, muß er durch einen geeigneten Zusatz desaktiviert werden. Als Desaktivierungsmittel eignen sich u.a. starke Säuren oder Carbonsäurehalogenide. Genannt seien beispielsweise Säuren, wie Phosphorsäure, Salzsäure, Schwefelsäure, Essigsäure, Oxalsäure, Methansulfonsäure, Trifluormethansulfonsäure und Toluolsulfonsäure und Carbonsäurehalogenide, wie Acetylchlorid, Benzoylchlorid sowie Toluolsulfonsäurechlorid. Im allgemeinen wird die Trimerisierungsreaktion durch Zusatz von ungefähr 1 bis 20, vorzugsweise 1 bis 3 Äquivalente starke Säure, Carbonsäurehalogenide und/oder Toluolsulfonsäurechlorid pro Äquivalent Katalysator und/oder durch Abkühlen oder Abschrecken der Reaktionsmischung wirksam beendet.

Die erfindungsgemäßen Polyisocyanatmischungen können direkt zu nahezu farblosen Polyurethan- oder Polyurethangruppen enthaltenden Polyisocyanurat-Kunststoffen verarbeitet werden. Sofern jedoch der Eigenfarbe der Endprodukte eine untergeordnete Bedeutung zukommt und andere Eigenschaften im Hinblick auf den Verwendungszweck durch Modifizierung zweckmäßigerweise verbessert werden, hat es sich als vorteilhaft erwiesen, die erfindungsgemäßen Isocyanuratgruppen enthaltenden Polyisocyanatmischungen mit anderen aliphatischen, cycloaliphatischen oder aromatischen Polyisocyanaten zu vermischen. Polyisocyanatmischungen der genannten Art bestehen aus ungefähr 100 bis 60 Gew.-%, vorzugsweise 95 bis 60 Gew.-% der erfindungsgemäßen Isocyanuratgruppen enthaltenden Polyisocyanatmischung und ungefähr 0 bis 40 Gew.-%, vorzugsweise 5 bis 40 Gew.-% eines aliphatischen, cycloaliphatischen und vorzugsweise aromatischen Polyisocyanates.

Als Mischkomponente bewährt haben sich beispielsweise aliphatische Diisocyanate, wie z.B. 1,4-Butan-, 2,2,4-Trimethyl-1,6-hexan- und vorzugsweise 1,6-Hexan-diisocyanat, cycloaliphatische Polyisocyanate, wie z.B. 3-Isocyanatomethyl-3,5,5-trimethyl-cyclohexylisocyanat, 1-Methyl-2,4- oder/und -2,6-cyclohexan-diisocyanat, 4,4'-, 2,4'-, 2,2'-Dicyclohexylmethan-diisocyanat, Mischungen aus 4,4'- und 2,4'-Dicyclohexylmethan-diisocyanat oder Mischungen aus 4,4'-, 2,4'- und 2,2'-Dicyclohexylmethan-diisocyanat und Polycyclohexyl-polymethylen-polyisocyanaten und vorzugsweise aromatische, gegebenenfalls carbodiimid- und/oder vorzugsweise urethangruppenhaltige Polyisocyanate wie z.B. 2,4- und/oder 2,6-Toluylendiisocyanat, roh-MDI, Naphthylen-diisocyanate, urethanmodifizierte 4,4'-Diphenylmethan-diisocyanate, urethanmodifizierte Mischungen aus 4,4'- und 2,4'-Diphenylmethan-diisocyanaten und urethanmodifizierten Mischungen aus roh-MDI. Die Polyisocyanate können einzeln oder in Form von Mischungen eingesetzt werden.

Zur Herstellung der Isocyanuratgruppen enthaltenden Polyisocyanate werden die erfindungsgemäß verwendbaren Mischungen aus 4,4'- und 2,4'-Diphenylmethan-diisocyanaten bei Temperaturen von 0 bis 160 °C, vorzugsweise 0 bis 30 °C mit dem Trimerisierungskatalysator versetzt, wobei es sich für die Qualität des Endproduktes als vorteilhaft erwiesen hat, den Trimerisierungskatalysator bei möglichst tiefen

4

EP 0 118 725 B1

Temperaturen bis Raumtemperatur hinzuzufügen. Anschließend läßt man bei diesen Temperaturen, vorzugsweise jedoch bei 25° bis 100°C und insbesondere bei 30 bis 80° reagieren, vorteilhafterweise unter Rühren, bis ein NCO-Gehalt von 23 bis 31 Gew.-%, vorzugsweise 25 bis 28 Gew.-%, bezogen auf das Gewicht der Polyisocyanatmischung erreicht ist. Hierzu werden üblicherweise Reaktionszeiten von 0,3 bis 60 Stunden, vorzugsweise von 0,75 bis 4 Stunden benötigt.

Nach Erreichen des gewünschten Isocyanatgehalts läßt man die Reaktionsmischung abkühlen und desaktiviert den Trimerisierungskatalysator, sofern dies erforderlich ist. Das Desaktivierungsmittel kann der Reaktionsmischung jedoch auch bereits bei der Trimerisierungstemperatur einverleibt werden.

Bei Verwendung von Diphenylmethan-diisocyanatmischungen mit hohem 4,4'-Diphenylmethan-diisocyanatgehalt können die erhaltenen Polyisocyanatmischungen eine schwache Trübung aufweisen, die gegebenenfalls abfiltriert wird.

Die erfindungsgemäßen Isocyanuratgruppen enthaltenden Polyisocyanatmischungen besitzen, wie bereits dargelegt, einen Isocyanatgehalt von 23 bis 31 Gew.-%, vorzugsweise 25 bis 28 Gew.-%, einen Gehalt an Isocyanuratgruppen von 10 bis 2,6 Gew.-%, vorzugsweise von 8,6 bis 5,6 Gew.-% und eine Viskosität von 20 bis 200 000 m.Pa.s, vorzugsweise von 300 bis 12 000 m.Pa.s bei 25°C.

Die Verbindungen sind wertvolle Ausgangsstoffe zur Herstellung von zelligen oder kompakten Polyurethan- oder Polyurethangruppen enthaltenden Polyisocyanurat-Kunststoffen, insbesondere zur Herstellung von im wesentlichen farblosen Hartschaumstoffen.

Die erfindungsgemäßen Polyisocyanatmischungen können auch in Gegenwart von organischen Lösungsmitteln trimerisiert werden. Als Lösungsmittel lassen sich solche verwenden, die mit Isocyanaten nicht reagieren wie z.B. Methylenchlorid, Chloroform, Chlorbenzol, Aceton, Methylethylketon, Ethylacetat, Butylacetat, Tetrahydrofuran, Dioxan, Dimethylformamid, Toluol und Xylol.

Nach Abbruch der Trimerisierung können die nicht umgesetzten 4,4'- und 2,4'-Diphenylmethandiisocyanate und gegebenenfalls die Lösungsmittel unter schonenden Bedingungen abgetrennt werden. Das läßt sich durch Hochvakuumdestillation in geeigneten Verdampfern oder durch Extraktion mit Lösungsmitteln erreichen, in denen nur die Diphenylmethan-diisocyanate, nicht jedoch die Isocyanuratgruppen enthaltende Polyisocyanate löslich sind, z.B. in aliphatischen oder cycloaliphatischen Kohlenwasserstoffen.

Die erfindungsgemäßen lösungsmittelhaltigen Polyisocyanatmischungen finden beispielsweise Anwendung für Polyurethan-Lacke oder -Klebstoffe.

Zur Herstellung der Polyurethan- oder Polyurethangruppen enthaltenden Polyisocyanurat-Kunststoffe werden die erfindungsgemäßen Isocyanuratgruppen enthaltenden Polyisocyanate mit Polyolen und gegebenenfalls Kettenverlängerungsmitteln in Gegenwart von Katalysatoren sowie gegebenenfalls Treibmitteln, Hilfsmitteln und Zusatzstoffen zur Reaktion gebracht.

Als Polyole kommen beispielsweise in Betracht; Polyester-polyole auf Basis von organischen Dicarbonsäuren, vorzugsweise aliphatischen Dicarbonsäuren mit 2 bis 12, vorzugsweise 4 bis 8 Kohlenstoffatomen im Alkylenrest, und mehrwertigen Alkoholen, vorzugsweise Diolen, mit Funktionalitäten von 2 bis 6, vorzugsweise 2 bis 4 und Hydroxylzahlen von 20 bis 700, wobei zur Herstellung von flexiblen Kunststoffen vorzugsweise Polyester-polyole mit Hydroxylzahlen von 20 bis 85, für halb-harte Kunststoffe vorzugsweise solche von 85 bis 150 und für zellige harte Kunststoffe vorzugsweise solche von 200 bis 490 Anwendung finden. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind: 1,2- bzw. 1,3-Propylenglykol, Dipropylenglykol, 1,5-Pentamethylenglykol, 1,8-Octamethylenglykol, Decamethylenglykol-1,10, Glycerin, Trimethylolpropan, Pentaerythrit sowie Zuckeralkohole, z.B. Sorbit und vorzugsweise Ethylenglykol, Diethylenglykol, 1,4-Butylenglykol und 1,6-Hexamethylenglykol. Als mehrwertige Alkohole können ferner Alkanolamine, Dialkanolamine und Trialkanolamine, z.B. Ethanolamin, Diethanolamin, Triethanolamin und Triisopropanolamin verwendet werden. Die genannten Dicarbonsäuren und mehrwertigen Alkohole können auch in Form von Mischungen eingesetzt werden. Besonders bewährt haben sich und daher vorzugsweise verwendet werden Polyester-polyole aus Adipinsäure oder Mischungen aus Bernstein-, Glutar- und Adipinsäure und Diethylenglykol und Alkoholmischungen aus Ethylenglykol/1,4-Butylenglykol, Ethylenglykol/Diethylenglykol, Ethylenglykol/Trimethylolpropan, Diethylenglykol/Trimethylolpropan, Ethylenglykol/Pentaerythrit, Ethylenglykol/Triisopropanolamin, Diethylenglykol/Triisopropanolamin und 1,4-Butylenglykol/1,5-Pentamethylenglykol/1,6-Hexamethylenglykol.

Anstelle der genannten Polyester-polyole, die einzeln oder als Gemische eingesetzt werden können, können auch homogene, bei 10 bis 30°C flüssige Mischungen aus Polyesterpolyolen und löslichen organischen Komponenten, z.B. hydroxylgruppenhaltigen Polyestern aus aromatischen Dicarbonsäuren und vorzugsweise unsubstituierten, linearen Diolen, Anwendung finden.

Vorzugsweise als Polyole verwendet man jedoch Polyether-polyole mit Funktionalitäten von 2 bis 8,

5

vorzugsweise 2 bis 4 und Hydroxylzahlen von 25 bis 800, vorzugsweise von 25 bis 85 für flexible, kompakte oder zellige Kunststoffe, von 85 bis 180 für halbharte Kunststoffe und von 200 bis 600 für harte, kompakte oder zellige Kunststoffe, die nach bekannten Verfahren, beispielsweise durch anionische Polymerisation mit Alkalihydroxiden, wie Natrium- oder Kaliumhydroxid oder Alkalialkoholaten, wie Natrium- oder Kaliummethylat, -ethylat oder Kaliumisopropylat als Katalysatoren oder durch kationische Polymerisation mit Lewissäuren, wie Antimonpentachlorid, Borfluorid-Etherat u.a. als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan. Als Polyether-polyole, hergestellt aus Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',N'',N''-Pentakis-(2-hydroxypropyl)-diethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethylethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan, Pentaeryhtrit, Sorbit und Saccharose.

Die Polyether-polyole können ebenso wie die Polyester-polyole einzeln oder in Form von Mischungen verwendet werden.

Als Polyole kommen ferner Kristallitsuspensionen in Betracht wie sie in der EP-A-32 380 beschrieben sind. Sie können entweder einzeln oder in Form von Mischungen eingesetzt werden.

Zu Treibmitteln, welche zur Herstellung von zelligen Kunststoffen verwendet werden können, gehört Wasser, das mit Isocyanatgruppen unter Bildung von Kohlendioxid reagiert. Die Wassermengen, die zweckmäßigerweise verwendet werden, betragen 0,1 bis 3 Gew.-%, bezogen auf das Gewicht an Polyisocyanat, bzw. 0,1 bis 2 Gew.-%, bezogen auf das Gesamtgewicht von Polyisocyanat und Polyol. Gegebenenfalls können auch größere Wassermengen verwendet werden.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 50°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der zelligen Kunststoffe hängt ab von der Schaumdichte, die man erreichen will, sowie gegebenenfalls von der Mitverwendung von Wasser. Im allgemeinen liefern Mengen von 5 bis 40 Gew.-%, bezogen auf organisches Polyisocyanat, bzw. 2 bis 30 Gew.-%, bezogen auf das Gesamtgewicht von Polyisocyanat und Polyol, zufriedenstellende Ergebnisse.

Als geeignete Katalysatoren zur Beschleunigung der Umsetzung zwischen den Polyolen, gegebenenfalls Wasser und den Polyisocyanaten sind beispielsweise zu nennen: tertiäre Amine, wie Dimethylbenzylamin, 2-(Dimethylaminoethoxi)-ethanol, N,N,N',N'-Tetramethyldiamino-ethylether, Bis-(dimethylaminopropyl)-harnstoff,N-Methyl- bzw. N-Ethylmorpholin, Dimethylpiperazin, 1,2-Dimethylimidazol, 1-Aza-bicyclo-(3,3,0)-octan und vorzugsweise Triethylendiamin, Metallsalze, wie Zinndioctoat, Bleioctoat, Zinn-diethylhexoat und vorzugsweise Zinn-(II)-salze und Dibutylzinndilaurat sowie insbesondere Mischungen aus tert. Aminen und organischen Zinnsalzen. Vorzugsweise verwendet werden 0,1 bis 5,0 Gew.-% Katalysator auf Basis tertiärer Amine und/oder 0,01 bis 1,0 Gew.-% Metallsalze, bezogen auf das Gewicht der Polyole.

Zur Herstellung von Polyurethangruppen enthaltenden Polyisocyanurat-Kunststoffen haben sich die üblichen Cyclisierungs- und Polymerisationskatalysatoren für Polyisocyanate bewährt. Als Beispiele seien genannt: starke Basen, wie quarternäre Ammoniumhydroxide, beispielsweise Benzyltrimethylammoniumhydroxid; Alkalimetallhydroxide, beispielsweise Natrium- oder Kaliumhydroxid; Alkalimetallalkoxide, beispielsweise Natriummethylat und Kaliumisopropylat; Trialkylphosphine, beispielsweise Triethylphosphin; Alkylaminoalkylphenole, beispielsweise 2,4,6-Tris-(dimethylaminomethyl)-phenol;3- und/oder 4-substituierte Pyridine, beispielsweise 3- oder 4-Methylpyridin; metall-organische Salze, beispielsweise Tetrakis-(hydroxyethyl)-natriumborat; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctat, Kalium-2-ethyl-hexoat, Kaliumbenzoat, Natriumpikrat und Phthalimid-kalium. Vorzugsweise verwendet werden die stark basischen N,N',N''-Tris-(dialkylaminoalkyl)-s-hexahydrotriazine, beispielsweise das N,N',N''-Tris-(dimethylaminopropyl)-s-hexahydrotriazin, gegebenenfalls in Kombination mit aliphatischen niedermolekularen Mono- und/oder Dicarbonsäuren, beispielsweise Essigsäure und/oder Adipinsäure oder aromatischen Carbonsäuren, wie Benzoesäure.

Die geeignete Menge an Isocyanuratgruppen bildenden Katalysatoren ist abhängig von der Wirksamkeit des in Frage kommenden Katalysators. Im allgemeinen hat es sich als zweckmäßig erwiesen, 1 bis 15 Gewichtsteile, vorzugsweise 3,5 bis 10 Gewichtsteile Katalysator für jeweils 100 Gewichtsteile an organischem Polyisocyanat zu verwenden.

Zur Herstellung von Urethan- und Isocyanuratgruppen enthaltenden Kunststoffen können die die Urethan- und Isocyanuratgruppenbildung fördernde Katalysatoren auch gemischt werden.

Die harten Schaumstoffe werden vorzugsweise in Abwesenheit von Kettenverlängerungsmitteln oder Vernetzern hergestellt. Hingegen hat es sich als vorteilhaft erwiesen, zur Herstellung von flexiblen, zelligen oder kompakten Polyurethanen oder Polyurethangruppen enthaltenden Polyisocyanuraten zusätzlich Kettenverlängerungsmittel oder Vernetzer mitzuverwenden. Geeignete Kettenverlängerungsmittel oder Vernetzer besitzen Molekulargewichte von 30 bis 600, vorzugsweise 60 bis 300 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie Propandiol-1,3, Pentandiol-1,5, Hexandiol-1,6 und vorzugsweise Ethandiol, Butandiol-1,4 und Bis-(2-hydroxyethyl)-hydrochinon, Diamine, wie Ethylendiamin und gegebenenfalls 3,3'- bzw. 3,3',5,5'-di- bzw. tetraalkylsubstituierte 4,4'-Diaminodiphenylmethane, Ethanolamine, wie Triethanolamin und Polyhydroxylverbindungen, wie Glycerin, Trimethylolpropan und niedermolekulare hydroxylgruppenhaltige Polyalkylenoxide aus den vorgenannten Ausgangsstoffen.

Der Reaktionsmischung können auch noch Hilfsmittel und Zusatzstoffe einverleibt werden. Genannt seien beispielsweise Stabilisatoren, Hydrolyseschutzmittel, Porenregler, fungistatisch und bakteriostatisch wirkende Substanzen, Farbstoffe, Pigmente, Füllstoffe, oberflächenaktive Stoffe und Weichmacher.

Als organische Füllstoffe seien beispielhaft genannt:
Sprödharze, wie sie bekannt sind als Bindemittel für die Druckindustrie, z.B. solche auf Basis Phenol, Kolophonium oder Melamin und Formaldehyd, Polyester mit Schmelzpunkten größer 190° C, vorzugsweise vernetzte Polyester auf Basis von di- oder höherfunktionellen Carbonsäuren mit Di- oder mit Monomeren wie z.B. (Meth)-acrylsäurederivaten, Homo- und Copolymerisate des Cyclopentadiens, Ketonharze, z.B. auf Basis von Cyclohexanon und spröde Polyurethanmaterialien, mit Schmelzpunkten größer als 190° C, beispielsweise vernetzte Polyurethane und Isocyanuratgruppen enthaltende Polyurethane, Polyvinylchlorid, Polyamid-6 und 6,6, Acrylatpfropfkautschuke, Butadienpfropfkautschuke sowie Polyvinylacetat.

Besonders bewährt haben sich und daher vorzugsweise verwendet werden jedoch anorganische Füllstoffe, wie die an sich bekannten üblichen Füllstoffe, Verstärkungsmittel, Beschwerungsmittel, Mittel zur Verbesserung des Abriebverhaltens in Anstrichfarben, Beschichtungsmittel usw. Verwendet werden können jedoch auch anorganische Pigmente. Im einzelnen seien beispielhaft genannt: silikatische Mineralien, beispielsweise Schichtsilikate, wie Antigorit, Serpentin, Hornblenden, Amphibole, Chrisolit, Talkum, Metalloxide, wie Kaolin, Aluminiumoxidhydrat, Titanoxide, Eisenoxide, Metallsalze, wie Kreide, Schwerspat, Bariumsulfat, anorganische Pigmente, wie Cadmiumsulfid, Zinksulfid sowie Glas.

Als Hilfsmittel genannt seien ferner beispielsweise oberflächenaktive Substanzen, welche zur Unterstützung der Homogenisierung der Ausgangsstoffe dienen und gegebenenfalls auch geeignet sind, die Zellstruktur zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,1 bis 5 Gew.-Teilen pro 100 Gew.-Teile der Mischung aus Polyisocyanat und Polyolen angewandt werden.

Nähere Angaben über die obengenannten anderen üblichen Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Zur Herstellung der flexiblen, halb-harten oder harten, zelligen oder kompakten Polyurethane werden die organischen Polyisocyanate mit den Polyolen, vorzugsweise Polyester- und/oder Polyetherpolyolen und gegebenenfalls Kettenverlängerungsmittel oder Vernetzer in solchen Mengen zur Umsetzung gebracht, daß das Verhältnis von reaktiven Wasserstoffatomen zu NCO-Gruppen 1:0,8 bis 2,5, vorzugsweise 1:0,9 bis 1,2 und insbesondere ungefähr 1:1 beträgt.

Für kompakte Polyurethangruppen enthaltende Polyisocyanurate werden die Aufbaukomponenten in Verhältnissen von reaktiven Wasserstoffatomen zu NCO-Gruppen von 1:40 bis 5, vorzugsweise 1:30 bis 15 und für entsprechende zellige Polyisocyanurate von 1:40 bis 2, vorzugsweise 1:10 bis 2 zur Reaktion gebracht.

Die Polyurethan- oder Polyurethangruppen enthaltende Polyisocyanurat-Kunststoffe werden vorzugsweise nach dem one shot Verfahren hergestellt. Hierzu mischt man die Polyisocyanate mit den Polyolen, Katalysatoren und gegebenenfalls Kettenverlängerungsmitteln oder Vernetzern, Treibmitteln, Hilfs- und Zusatzstoffen intensiv in den genannten Mengenverhältnissen bei Temperaturen von 0 bis 50° C, vorzugsweise 15 bis 40° C und läßt danach die Reaktionsmischung in offenen oder geschlossenen Formen aushärten oder aufschäumen.

Aus den erfindungsgemäßen Polyisocyanatmischungen hergestellte Hartschaumstoffe sind im wesentlichen weiß, zeigen gute flammhemmende Eigenschaften, ergeben eine niedrige Rauchgasdichte und weisen gute mechanische Eigenschaften auf, wobei die Druckfestigkeit besonders hervorgehoben werden muß.

## Beispiele

Herstellung von Isocyanuratgruppen enthaltenden Polyisocyanatmischungen aus 4,4'- und 2,4'-Diphenylmethan-diisocyanaten

## Beispiel 1

In einem 4 Liter Glaskolben wurden zu 3 kg einer Mischung aus 47 Gew.-% 4,4'-Diphenylmethan-diisocyanat und 53 Gew.-% 2,4'-Diphenylmethan-diisocyanat unter Rühren bei 40° C 0,6 g 1,3,5-Tris(3-dimethylaminopropyl)-s-hexahydrotriazin gelöst in 5 g Phthalsäuredimethylester hinzugefügt. Das erhaltene Reaktionsgemisch wurde bei dieser Temperatur unter Rühren 2 Stunden lang trimerisiert und danach die Isocyanuratbildung durch Zugabe von 1,5 g Benzoylchlorid abgestoppt.

Die erhaltene Polyisocyanatmischung besaß einen NCO-Gehalt von 26,9 Gew.-% und eine Viskosität von 1060 m.Pa.s bei 25° C.

## Beispiel 2

In einem 4 Liter Glaskolben fügte man zu 3 kg der obengenannten 4,4'- und 2,4'-Diphenylmethan-diisocyanatmischung unter Rühren bei 40° C 0,72 g 1,3,5-Tris(3-dimethylaminopropyl)-s-hexahydrotriazin gelöst in 5 g Phthalsäuredimethylester. Das Reaktionsgemisch wurde danach bei 80° C ungefähr 90 Minuten lang trimerisiert. Nach Erreichen eines NCO-Gehalts von 25,7 Gew.-% wurde langsam auf 23° C abgekühlt, bei dieser Temperatur 18 Stunden gerührt und die Reaktion durch Zugabe von 1,5 g Benzoylchlorid abgestoppt. Die erhaltene Polyisocyanatmischung besaß einen NCO-Gehalt von 24,1 Gew.-% und eine Viskosität von 10 700 m.Pa.s gemessen bei 25° C.

## Beispiel 3

In einem 4 Liter Glaskolben fügte man zu 3 kg einer Mischung aus 4,4'- und 2,4'-Diphenylmethan-diisocyanat im Gewichtsverhältnis 47:53 mit einem Gehalt an leicht hydrolysierbarem Chlor von 43 ppm unter Rühren bei 40° C nacheinander in 3 gleichen Portionen 0,9 g eines Adduktes, hergestellt aus einem Mol 1,3,5-Tris(3-dimethylaminopropyl)-s-hexahydrotriazin, einem Mol 1,2-Propylenoxid und einem Mol 2-Ethyl-hexansäure, in Form einer 15 gew.-%igen Lösung in Phthalsäuredimethylester. Nach einer Reaktionszeit von 2 Stunden wurde die Trimerisierung durch Zugabe von 1 g Benzoylchlorid abgestoppt.

Die erhaltene Polyisocyanatmischung besaß einen NCO-Gehalt von 25,8 Gew.-% und eine Viskosität von 4500 m.Pa.s, gemessen bei 25° C.

## Beispiel 4

Zu 40 kg einer Mischung aus 4,4'- und 2,4'-Diphenylmethan-diisocyanat im Gewichtsverhältnis 47:53 mit einem Gehalt an leicht hydrolysierbarem Chlor von 70 ppm fügte man unter Rühren bei 40° C nacheinander in zwei gleichen Portionen 14 g des obengenannten Trimerisierungskatalysators gelöst in 200 g Phthalsäuredimethylester. Nach der zweiten Katalysatorzugabe stieg die Temperatur kurzzeitig auf 77 bis

8

80° C und fiel dann wieder auf 40° C ab. Nach Erreichen eines NCO-Gehaltes von 24,8 Gew.-% wurde die Reaktion durch Zugabe von 13,5 g Benzoylchlorid abgestoppt.

Die erhaltene Polyisocyanatmischung besaß eine Viskosität von 9700 m.Pa.s bei 25° C.

Beispiele 5 bis 15

Verfuhr man analog den Angaben des Beispiels 3, variierte jedoch die Zusammensetzung der 4,4'-/2,4'-Diphenylmethan-diisocyanatmischung, die Katalysatormenge und die Temperatur der Katalysatorzugabe, so erhielt man die in Tabelle 1 beschriebenen Isocyanuratgruppen enthaltenden Polyisocyanatmischungen.

Tabelle 1

Isocyanuratgruppen enthaltende Polyisocyanatmischungen

| Beisp. Nr. | Diphenylmethan-diisocyanate 4,4'- Gew.-% | 2,4'- Gew.-% | Katalysator-menge Gew.-% | Katalysator-zugabe °C | Benzoyl-chlorid Gew.-% | Polyisocyanatmischung NCO-Gehalt Gew.-% | Viskosität m.Pa.s 25°C | Bemerkg. |
|---|---|---|---|---|---|---|---|---|
| 5 | 47 | 53 | 0,05 | 17 | 0,04 | 25,2 | 11 530 | – |
| 6 | 47 | 53 | 0,025 | 20 | 0 | 25,0 | 9 800 | stab.Lösg. |
| 7 | 47 | 53 | 0,02 | 40 | 0 | 27,1 | 565 | " |
| 8 | 73,5 | 26,5 | 0,02 | 40 | 0,04 | 31,3 | 40 | – |
| 9 | 73,5 | 26,5 | 0,03 | 40 | 0,04 | 26,3 | 1 200 | schw.Trübg. |
| 10 | 79 | 21 | 0,02 | 40 | 0,04 | 28,8 | 180 | " |
| 11 | 75 | 20 | 0,03 | 40 | 0,04 | 27,0 | 3 300 | – |
| 12 | 30 | 70 | 0,046 | 40 | 0 | 27,4 | 690 | – |
| 13 | 47 | 53 | 0,043 | 40 | 0,04 | 24,9 | 8 800 | – |
| 14 | 47 | 53 | 0,04 | 40 | 0 | 27,0 | 740 | – |
| 15 | 47 | 53 | 0,04 | 40 | 0,04 | 25,6 | 3 580 | – |

Beispiel 16

80 Gew.-Teile der nach Beispiel 6 hergestellten Isocyanuratgruppen enthaltenden Polyisocyanatmischung wurden bei Raumtemperatur mit 20 Gew.-Teilen einer Mischung aus 2,4- und 2,6-Toluylen-diisocyanat im Gewichtsverhältnis 80:20 gemischt.

Die erhaltene Polyisocyanatmischung besaß einen NCO-Gehalt von 29,5 Gew.-% und eine Viskosität bei 25° C von 550 m.Pa.s.

Beispiel 17

Man verfuhr analog Beispiel 16, mischte die Isocyanuratgruppen enthaltende Polyisocyanatmischung und die Toluylendiisocyanatmischung jedoch im Gewichtsverhältnis 90:10.

Die erhaltene Polyisocyanatmischung besaß einen NCO-Gehalt von 27,1 Gew.-% und eine Viskosität bei 25° C von 2100 m.Pa.s.

Herstellung von harten Polyurethangruppen enthaltenden Polyisocyanuratschaumstoffen

Allgemeine Herstellungsvorschrift:

A-Komponente:
Mischung aus
Polyol, Katalysator, Schaumstabilisator, Treibmittel und gegebenenfalls Flammschutzmittel.
B-Komponente:
Mischung aus Diphenylmethan-diisocyanaten und Polyphenyl-polymethylen-polyisocyanaten mit einem NCO-Gehalt von 31 Gew.-% (roh-MDI).

Die Komponenten A und B wurden bei 23° C intensiv gemischt und in einem Karton (Größe 22x22x20 cm) frei aufschäumen gelassen.

Die Art und Menge der verwendeten Ausgangskomponenten, die Kenndaten und gemessenen mechanischen Eigenschaften sind in Tabelle 2 zusammengefaßt.

Für die in Tabelle 2 genannten Ausgangskomponenten wurden folgende Abkürzungen gewählt:

Kristallitsusp.:

Kristallitsuspension mit einer Hydroxylzahl von 265, bestehend aus 48 Gew.-Teilen eines Sucrosepolyols, 28 Gew.-Teilen Diethylenglykoladipat und 24 Gew.-Teilen Neopentylglykolisophthalat.

Su-Pe:

Polyether-polyol mit einer OH-Zahl von 400, hergestellt aus einer Mischung aus Sucrose, Triethanolamin und Wasser als Startermoleküle und 1,2-Propylenoxid.

PE:

Polypropylen-glykol mit einer OH-Zahl von 240

Thanol:

® Thanol R 350 X, Polyether-polyol der Firma Jefferson

TCEP:

Trichlorethylphosphat

DC 193:

Schaumstabilisator auf Silikonbasis, Handelsprodukt der Firma Dow Corning

B 1903:

10

Schaumstabilisator auf Silikonbasis, Handelsprodukt der Firma Goldschmidt, Essen

PV:

Polyurethankatalysator ® Desmorapid PV der Firma Bayer AG

Kat. 1:

Katalysatoraddukt auf Basis Pentamethyl-diethylentriamin, 1,2-Propylenoxid und 2-Ethylhexansäure.

Kat. 2:

Kaliumformiat, 35 gew.-% Lösung in Ethylenglykol.

Tabelle 2

| Beispiele Vergl.-Beisp. | | I | 18 | II | 19 | III | 20 |
|---|---|---|---|---|---|---|---|
| Ausgangsstoffe: | | | | | | | |
| roh-MDI [Gew.-Teile] | | 200 | – | 240 | – | 162,2 | – |
| Polyisocyanatmischung | | | | | | | |
| nach Beispiel 1 [Gew.-T.] | | – | 231,3 | – | – | – | – |
| " " 2 [Gew.-T.] | | – | – | – | 288 | – | – |
| " " 3 [Gew.-T.] | | – | – | – | – | – | 195 |
| Kristallitsusp. [Gew.T.] | | 50,5 | 50,5 | – | – | 118 | 118 |
| Su-PE [Gew.-T.] | | – | – | 94,4 | 94,4 | – | – |
| PE [Gew.-T.] | | 8 | 8 | – | – | – | – |
| Thanol [Gew.-T.] | | 25 | 25 | – | – | – | – |
| Glycerin [Gew.-T.] | | – | – | 5,6 | 5,6 | – | – |
| TCEP [Gew.-T.] | | 22,5 | 22,5 | 25 | 25 | – | – |
| DC 193 [Gew.-T.] | | 0,7 | 0,7 | – | – | 2 | 2 |
| B 1903 [Gew.-T.] | | 0,8 | 0,8 | 1,5 | 1,5 | – | – |
| Triethylamin [Gew.-T.] | | – | – | – | – | 0,2 | 0,2 |
| Dimethylcyclohexylamin | | – | – | 1,5 | 1,5 | – | – |
| PV [Gew.-T.] | | 0,5 | 0,5 | – | – | – | – |
| Kat. 1 [Gew.-T.] | | – | – | – | – | 2 | 2 |
| Kat. 2 [Gew.-T.] | | 2,5 | 2,5 | 3,5 | 3,5 | – | – |
| Trichlorfluormethan " | | 43 | 47 | 35 | 40 | 39 | 43 |
| Startzeit [Sec] | | 13 | 21 | 31 | 25 | 47 | 58 |
| Abbindezeit [Sec] | | 60 | 65 | 47 | 40 | 110 | 140 |
| Steigzeit [Sec] | | 100 | 130 | 90 | 50 | 240 | 285 |
| mechanische Eigenschaften: | | | | | | | |
| Dichte [g/L] | | 33,7 | 29,7 | 53 | 60 | 34 | 32 |
| Druckfestigkeit nach DIN 53 421 [N/mm$^2$] | | 0,26 | 0,23 | 0,43 | 0,61 | 0,25 | 0,28 |
| Biegefestigkeit nach DIN 53 423 [N/mm$^2$] | | 0,34 | 0,33 | 0,74 | 0,91 | 0,35 | 0,33 |
| Flammbeständigkeit nach DIN 4102 B2 | | 7-9 7-9 | 7-9 7-9 | knapp bestanden | 11-13 11-13 | – – | – – |
| nach EMPA: | | | | | | | |
| Brandverhalten | | V/2 | V/2 | – | – | – | – |
| Rauchgasdichte | | 69% | 57% | – | – | – | – |

Herstellung von harten Polyurethanschaumstoffen

Beispiel 21

A-Komponente

Mischung aus:

19,6 Gew.-Teilen eines Polyether-polyols mit einer OH-Zahl von 400, hergestellt aus einer Mischung aus Sucrose, Glycerin und Wasser als Startermoleküle und 1,2-Propylenoxid,

9,0 Gew.-Teilen N,N,N',N'-Tetrakis-(2-hydroxypropyl)-ethylendiamin,

25 Gew.-Teilen Phosphor enthaltendes Flammschutzpolyol ® Ixol B 251 der Firma Solvay)

3 Gew.-Teilen Glycerin,

16 Gew.-Teilen Tris(chlorethylphosphat,

1 Gew.-Teil Silikonstabilisator (Stabilisator OS 710 der Bayer AG),

0,7 Gew.-Teilen Dimethylcyclohexylamin,

0,7 Gew.-Teilen Wasser und

32,5 Gew.-Teilen Trichlorfluormethan.

B-Komponente

121,6 Gew.-Teile einer teilweise isocyanuratisierten Mischung aus 2,4'- und 4,4'-Diphenylmethandiisocyanaten im Gewichtsverhältnis 53:47 mit einem NCO-Gehalt von 25,6 Gew.-%, hergestellt gemäß Beispiel 15.

Die Komponenten A und B wurden bei 23°C intensiv gemischt und in einem Karton mit den Abmessungen 22x22x20 cm frei aufschäumen gelassen.

Die an dem erhaltenen Polyurethan-Hartschaumstoff gemessenen Kenndaten und mechanischen Eigenschaften sind in Tabelle 3 zusammengefaßt.

Beispiel 22

A-Komponente

Analog Beispiel 21, wobei jedoch anstelle von 32,5 Gew.-Teilen nur 30,8 Gew.-Teile Trichlorfluormethan eingesetzt wurden.

B-Komponente

115,2 Gew.-Teile einer teilweise isocyanuratisierten Mischung aus 2,4'- und 4,4'-Diphenylmethandiisocyanaten mit einem NCO-Gehalt von 27,0 Gew.-%, hergestellt gemäß Beispiel 14.

Die Komponenten A und B wurden analog Beispiel 21 gemischt und aufschäumen gelassen.

Die an dem erhaltenen Polyurethan-Hartschaumstoff gemessenen Kenndaten und mechanischen Eigenschaften sind in Tabelle 3 zusammengefaßt.

Beispiel 23

A-Komponente

Analog Beispiel 21, wobei jedoch anstelle von 32,5 Gew.-Teilen 33,4 Gew.-Teile Trichlorfluormethan verwendet wurden.

B-Komponente

125 Gew.-Teile einer teilweise isocyanuratisierten Mischung aus 2,4'- und 4,4'-Diphenylmethandiisocyanaten mit einem NCO-Gehalt von 24,9 Gew.-%, hergestellt gemäß Beispiel 13.

Die Komponenten A und B wurden analog Beispiel 21 gemischt und aufschäumen gelassen.

Die an dem erhaltenen Polyurethan-Hartschaumstoff gemessenen Kenndaten und mechanischen Eigenschaften sind in Tabelle 3 zusammengefaßt.

Tabelle 3

| Beispiele | | 21 | 22 | 23 |
|---|---|---|---|---|
| **Kenndaten:** | | | | |
| Rührzeit | [sec] | 20 | 15 | 20 |
| Startzeit | [sec] | 32 | 25 | 35 |
| Abbindezeit | [sec] | 96 | 80 | 95 |
| Steigzeit | [sec] | – | 135 | – |

| mechanische Eigenschaften: | | | | |
|---|---|---|---|---|
| Dichte | [g/l] | 24,4 | 25,8 | 26,7 |
| Druckfestigkeit nach DIN 53 421 | [N/mm$^2$] | 0,226 | 0,249 | 0,269 |
| Stauchung bei Bruch nach DIN 53 421 | [%] | 7,4 | 7,8 | 7,0 |
| Biegefestigkeit nach DIN 53 423 | [N/mm$^2$] | 0,243 | 0,282 | 0,306 |
| Durchbiegung bei Bruch nach DIN 53 423 | [mm] | 13,1 | 11,5 | 11,5 |
| Formbeständigkeit in der Wärme nach DIN 53 424 | [°C] | 175 | 170 | 187 |

Herstellung von kompakten Polyurethangruppen enthaltenden Polyisocyanuraten

Beispiele 24a und 24b

A-Komponente

Mischung aus

98,2 Gew.-Teilen einer Pfropf-polyether-polyol-dispersion mit einer Hydroxylzahl von 29 und einem Copolymerisatgehalt von 20 Gew.-%, bezogen auf das Gesamtgewicht, hergestellt durch in situ Polymerisation einer Mischung aus Styrol und Acrylnitril im Gewichtsverhältnis 3:2 in Gegenwart eines Polyether-polyols auf Basis Trimethylolpropan, Propylenoxid und Ethylenoxid,
0,5 Gew.-Teilen Ortho-Kieselsäuretetraethylester,
1,20 Gew.-Teilen einer 40 gew.-%igen Lösung von Kaliumacetat in Ethylenglykol und
0,15 Gew.-Teilen eines Amidin-Zinnsalz-Komplexes.

B-Komponente

Isocyanuratgruppen enthaltende Polyisocyanatmischung aus 4,4'- und 2,4'-Diphenylmethan-diisocyanat im Gewichtsverhältnis 47:53 mit einem NCO-Gehalt von 26,2 Gew.-%, hergestellt nach den Angaben des Beispiels 3.
100 Gew.-Teile der A-Komponente und 140 Gew.-Teile (Beispiel 24a) bzw. 160 Gew.-Teile (Beispiel 24b) der B-Komponente wurden mit Hilfe einer Hochdruckdosiermaschine vom Typ $^R$ Puromat 30 der Elastogran Maschinenbau, Straßlach bei München, und nach der Reaktionsspritzgußtechnik in einer geschlossenen Metallform mit den Innenabmessungen 400x400x4 mm zu Formplatten verarbeitet, die nach 20 Sekunden entformt werden konnten. Die Temperatur der A- und B-Komponente und der Metallform betrug 50° C.

Die an der Formplatte gemessenen mechanischen Eigenschaften sind in Tabelle 4 zusammengefaßt.

Vergleichsbeispiel IV

A-Komponente

Analog Beispiel 24a.

B-Komponente

Mischung aus 4,4'- und 2,4'-Diphenylmethan-diisocyanat im Gewichtsverhältnis 47:53 mit einem NCO-Gehalt von 33,6 Gew.-%.

Bei einem den Beispielen 24a und 24b entsprechenden Verhältnis von OH- : NCO-Gruppen, d.h. bei einem Mischungsverhältnis von 100 Gew.-Teilen der A-Komponente zu 110 Gew.-Teilen bzw. 125 Gew.-Teilen der B-Komponente, war die Formulierung nicht mehr verarbeitbar, da die Reaktionsmischung aufgrund der hohen Isocyanuratisierungsgeschwindigkeit innerhalb von 1,5 bis 3 sec. gelierte und der Formkern nicht mehr gefüllt werden konnte.

Vergleichsbeispiele Va und Vb

A-Komponente

Mischung aus
98,67 Gew.-Teilen einer Pfropf-polyether-polyol-dispersion analog Beispiele 24a und 24b
0,50 Gew.-Teilen Ortho-Kieselsäuretetraethylester,
0,75 Gew.-Teilen einer 40 gew.-%igen Lösung von Kaliumacetat in Ethylenglykol und
0,08 Gew.-Teilen eines Amidin-Zinnsalz-Komplexes.

B-Komponente

Mischung aus 4,4'- und 2,4'-Diphenylmethan-diisocyanat im Gewichtsverhältnis 47:53 mit einem NCO-Gehalt von 33,6 Gew.-%.

100 Gew.-Teile der A-Komponente und 110 Gew.-Teile (Vergleichsbeispiel Va) bzw. 125 Gew.-Teile (Vergleichsbeispiel Vb) der B-Komponente wurden analog den Angaben der Beispiele 24a bzw. 24b zu Formplatten verarbeitet. Aufgrund des stark verminderten Katalysatorgehalts betrug die Entformzeit 60 sec.

Die an den Formplatten gemessenen mechanischen Eigenschaften sind in Tabelle 4 zusammengefaßt.

## Tabelle 4

Mechanische Eigenschaften von Formplatten

| | Beispiele | | Vergleichsbeispiele | |
|---|---|---|---|---|
| | 24a | 24b | Va | Vb |
| Mischungsverhältnis:<br>Gew.-Teile B-Komponente<br>pro 100 Gew.-Teile<br>A-Komponente | 140 | 160 | 110 | 125 |
| mechanische Eigenschaften: | | | | |
| Reißfestigkeit nach<br>DIN 53 455 [N/mm$^2$] | 55 | 50 | 46 | 42 |
| Reißdehnung nach<br>DIN 53 455 [%] | 20 | 17 | 18 | 15 |
| Schlagzähigkeit nach<br>DIN 53 453 [kJ/m$^2$] | 58 | 47 | 50 | 43 |
| Wärmeformbeständigkeit<br>nach Iso-R-75 Methode B [°C] | 140 | 185 | 105 | 135 |
| Härte [Shore D] | 75 | 76 | 74 | 74 |
| Schlagzähigkeit nach der<br>Temperung bei 200°C: | | | | |
| 30 Min. [kJ/m$^2$] | 36 | 31 | 24 | 22 |
| 60 " " | 36 | 29 | 18 | 14 |
| 120 " " | 33 | 28 | 11 | 8 |

Die Beispiele 24a und 24b zeigen, daß durch die Verwendung der erfindungsgemäßen Isocyanuratgruppen enthaltenden Polyisocyanatmischungen Formplatten mit einer hohen Schlagzähigkeit erhalten wurden, die auch bei extremer Temperaturbelastung (200°C bis 120 Minuten) nur um ungefähr 40 % abnimmt, wobei die Abnahme nicht progressiv mit der Zeitdauer zunimmt. Besonders hervorzuheben ist die hohe Wärmeformbeständigkeit der Formplatten, insbesondere bei höherer Kennzahl.

Nach den Vergleichsbeispielen Va und Vb wurde hingegen ein Plattenmaterial erhalten, dessen Schlagzähigkeit bei der Wärmebehandlung stark progessiv abnimmt bis zur Unbrauchbarkeit. Nachteilig ist ferner die geringe Wärmeformbeständigkeit, die die Verwendung des Materials ungeeignet macht für thermische Trennstege in Aluminium-Fensterprofilen, die anschließend pulverlackiert werden.

**Patentansprüche**

1. Bei Raumtempertur flüssige, Isocyanuratgruppen enthaltende Polyisocyanatmischungen mit einem Isocyanatgehalt von 23 bis 31 Gew.-%, erhalten durch partielle Trimerisierung einer Mischung, bestehend aus

80 bis 30 Gew.-%, bezogen auf das Gesamtgewicht,
4,4'-Diphenylmethan-diisocyanat und
20 bis 70 Gew.-%, bezogen auf das Gesamtgewicht,
2,4'-Diphenylmethan-diisocyanat,

in Gegenwart eines Trimerisierungskatalysators und gegebenenfalls nachfolgender Desaktivierung des Trimerisierungskatalysators, so daß dieser bei Raumtemperatur in einer inaktiven Form vorliegt.

2. Polyisocyanatmischungen nach Anspruch 1, dadurch gekennzeichnet, daß sie einen Gehalt an Isocyanuratgruppen von 10 bis 2,6 Gew.-% besitzen.

3. Polyisocyanatmischungen nach Anspruch 1, dadurch gekennzeichnet, daß sie eine Viskosität von 20 bis 200 000 m Pa.s bei 25° C aufweisen.

4. Polyisocyanatmischungen, bestehend aus

100 bis 60 Gew.-% einer Isocyanuratgruppen enthaltenden Polyisocyanatmischung nach Anspruch 1 und

0 bis 40 Gew.-% eines anderen aliphatischen, cycloaliphatischen oder aromatischen Polyisocyanates, wobei die Gew.-% bezogen sind auf das Gesamtgewicht der Polyisocyanatmischung.

5. Polyisocyanatmischungen, bestehend aus

95 bis 60 Gew.-% einer Isocyanuratgruppen enthaltenden Polyisocyanatmischung nach Anspruch 1 und 5 bis 40 Gew.-% eines aromatischen Polyisocyanates aus der Gruppe der 2,4- und/oder 2,6-Toluylendiisocyanate, Mischungen aus 4,4'-, 2,4'-, 2,2'-Diphenylmethan-diisocyanaten und Polyphenyl-polymethylen-polyisocyanaten, urethanmodifizierten 4,4'-Diphenylmethan-diisocyanaten, urethanmodifizierten Mischungen aus 4,4'- und 2,4'-Diphenylmethan-diisocyanaten und/oder urethanmodifizierten Mischungen aus 4,4'-, 2,4'-, 2,2'-Diphenylmethan-diisocyanaten und Polyphenyl-polymethylen-polyisocyanaten.

6. Verfahren zur Herstellung von bei Raumtemperatur flüssigen, Isocyanuratgruppen enthaltenden Polyisocyanatmischungen auf Diphenylmethan-diisocyanatbasis, dadurch gekennzeichnet, daß man eine Mischung, bestehend aus

80 bis 30 Gew.-%, bezogen auf das Gesamtgewicht,
4,4'-Diphenylmethan-diisocyanat und
20 bis 70 Gew.-%, bezogen auf das Gesamtgewicht,
2,4'-Diphenylmethan-diisocyanat,

bei Temperaturen von 0 bis 160° C in Gegenwart von Trimerisierungskatalysatoren trimerisiert, bis die Polyisocyanatmischung einen NCO-Gehalt von 23 bis 31 Gew.-% besitzt, danach das Reaktionsgemisch gegebenenfalls abkühlt und den Trimerisierungskatalysator gegebenenfalls desaktiviert, so daß dieser bei Raumtemperatur in einer inaktiven Form vorliegt.

7. Verfahren nach Anspruch 6, dadurch gekennzeichnet, daß man der Mischung aus 4,4'- und 2,4'-Diphenylmethan-diisocyanat den Trimerisierungskatalysator bei Temperaturen von 0° bis 30° C einverleibt und danach bei Temperaturen bis 100° C trimerisiert.

8. Verfahren nach Anspruch 6, dadurch gekennzeichnet, daß man als Trimerisierungskatalysator ein Addukt aus einem Mol Tris-(dimethylaminopropyl)-s-hexahydrotriazin, einem Mol 1,2-Propylenoxid und einem Mol 2-Ethyl-hexansäure verwendet, die Trimerisierung bei Temperaturen von 25 bis 100° C durchführt und danach die Reaktionsmischung abkühlen läßt, ohne den Trimerisierungskatalysator zu desaktivieren.

9. Verwendung der Isocyanuratgruppen enthaltenden Polyisocyanatmischungen nach Anspruch 1 zur Herstellung von zelligen oder kompakten Polyurethan- oder Polyurethangruppen enthaltenden Polyisocyanurat-Kunststoffen.

10. Verwendung der Isocyanuratgruppen enthaltenden Polyisocyanatmischungen nach Anspruch 1 zur Herstellung von Polyurethan-Hartschaumstoffen oder Polyurethangruppen enthaltenden Polyisocyanurat-Schaumstoffen.

**Claims**

1. A polyisocyanate mixture which is liquid at room temperature, contains isocyanurate groups, has an isocyanate content of from 23 to 31% by weight and is obtained by partial trimerization of a mixture comprising from 80 to 30% by weight, based on the total weight, of 4,4'-diphenylmethane diisocyanate and

from 20 to 70% by weight, based on the total weight, of 2,4'-diphenylmethane diisocyanate, in the presence of a trimerization catalyst and, if necessary, with subsequent deactivation of the trimerization catalyst so that the latter is in an inactive form at room temperature.

2. A polyisocyanate mixture as claimed in claim 1, which has an isocyanurate group of from 10 to 2.6% by weight.

3. A polyisocyanate mixture as claimed in claim 1, which has a viscosity of from 20 to 200,000 m Pa.s at 25°C.

4. A polyisocyanate mixture comprising
from 100 to 60% by weight of a polyisocyanate mixture containing isocyanurate groups as claimed in claim 1 and from 0 to 40% by weight of another aliphatic, cycloaliphatic or aromatic polyisocyanate, the % by weight data being based on the total weight of the polyisocyanate mixture.

5. A polyisocyanate mixture comprising
from 95 to 60% by weight of a polyisocyanate mixture as claimed in claim 1 containing isocyanurate groups and from 5 to 40% by weight of an aromatic polyisocyanate from the group comprising 2,4- and/or 2,6-tolylene diisocyanate, mixtures of 4,4'-, 2,4'- and 2,2'-diphenylmethane diisocyanates and polyphenyl-polymethylene polyisocyanates, urethane-modified 4,4'-diphenylmethane diisocyanates, urethane-modified mixtures of 4,4'- and 2,4'-diphenylmethane diisocyanates and/or urethane-modified mixtures of 4,4'-, 2,4'- and 2,2'-diphenylmethane diisocyanates and polyphenyl-polymethylene polyisocyanates.

6. A process for the preparation of a polyisocyanate mixture which is liquid at room temperature, contains isocyanurate groups and is based on diphenylmethane diisocyanate, which comprises trimerizing a mixture comprising
from 80 to 30% by weight, based on the total weight, of 4,4'-diphenylmethane diisocyanate and
from 20 to 70% by weight, based on the total weight, of 2,4'-diphenylmethane diisocyanate,
at from 0 to 160°C in the presence of a trimerization catalyst until the polyisocyanate mixture has an NCO content of from 23 to 31% by weight, and then, if necessary, cooling the reaction mixture and, if necessary, deactivating the trimerization catalyst so that the latter is in an inactive form at room temperature.

7. A process as claimed in claim 6, wherein the trimerization catalyst is introduced into the mixture of 4,4'- and 2,4'-diphenylmethane diisocyanate at from 0 to 30°C, and the trimerization is then carried out at up to 100°C.

8. A process as claimed in claim 6, wherein the trimerization catalyst used is an adduct of one mol of tris-(dimethylaminopropyl)-s-hexahydrotriazine, one mol of 1,2-propylene oxide and one mol of 2-ethylhexanoic acid, the trimerization is carried out at from 25 to 100°C, and the reaction mixture is then allowed to cool without the trimerization catalyst being deactivated.

9. The use of a polyisocyanate mixture containing isocyanurate groups as claimed in claim 1 for the preparation of cellular or compact polyisocyanurate plastics containing polyurethane or polyurethane groups.

10. The use of a polyisocyanate mixture containing isocyanurate groups as claimed in claim 1 for the preparation of hard polyurethane foams or polyisocyanurate foams containing polyurethane groups.

## Revendications

1. Mélanges de polyisocyanate contenant des groupes isocyanurate liquides à la température ordinaire, à teneur en isocyanate de 23 à 31 % en poids, obtenus par trimérisation partielle d'un mélange constitué

EP 0 118 725 B1

de 80 à 30 % en poids, rapporté en poids total, de 4,4'-diphénylméthane-disiocyanate et 20 à 70 % en poids, rapporté au poids total de 2,4'-diphénylméthane-disocyanate en présence d'un catalyseur de trimérisation et éventuellement désactivation suivante du catalyseur de trimérisation de manière que celui-ci se présente, à la température ordinaire, sous une forme inactive.

2. Mélanges de polyisocyanate selon la revendication 1,
caractérisés par le fait qu'ils présentent une teneur en groupes isocyanurate de 10 à 2,6 % en poids.

3. Mélanges de polyisocyanate selon la revendication 1,
caractérisé par le fait qu'ils présentent une viscosité de 20 à 200 000 m.Pa.s à 25 degrés C.

4. Mélanges de polyisocyanate constitués de 100 à 60 % en poids d'un mélange de polyisocyanate contenant des groupes isocyanurate selon la revendication 1 et 0 à 40 % en poids d'un autre polyisocyanate aliphatique, cycloaliphatique ou aromatique, les pourcentages en poids étant rapportés au poids total du mélange de polyisocyanate.

5. Mélanges de polyisocyanate constitués de 95 à 60 % d'un mélange de polyisocyanate contenant des groupes isocyanurate, selon la revendication 1 et 5 à 40 % en poids d'un polyisoryanate aromatique provenant du groupe des 2,4- et/ou 2,6-toluylène-diisocyanates, des mélanges 4,4'-,2,4'-, 2,2'-diphenylméthane-diisocyanates et polyphényle-polymethylène-polyisocyanate de 4,4' diphénylméthane-diisocyanates modifiés par uréthane, mélanges modifiés par urethane de 4,4'- et 2,4'-diphénylméthane-diisocyanate et/ou des mélanges modifiés par uréthane de 4,4'-, 2,4'-, 2,2'-diphenylméthane-diisocyanates et polyphenyle-polymethylène-polyisocyantes.

6. Procédé de préparation de mélanges de polyisocyanate contenant des groupes isocyanurate liquides à la température ordinaire, à base de diphénylméthane-diisocyanate, caractérisé par le fait que l'on trimérise un mélange constitué de 80 à 30 % en poids, rapporté en poids total, de 4,4'-diphénylméthane-diisocyanate et 20 à 70 % en poids, rapporté au poids total de 2,4'-diphénylméthane-diisocyanate à des températures de 0 à 160 degrés C, en présence de catalyseur de trimérisation jusqu'à ce que le mélange de polyisocyanate présente une teneur en NCO de 23 à 31 % en poids, puis on laisse éventuellement refroidir de mélange de réaction et on désactive éventuellement le catalyseur de trimérisation de manière que celui se trouve, à la température ordinaire, sous une forme inactive.

7. Procédé selon la revendication 6, caractérisé par le fait qu'on incorpore le catalyseur de trimérisation au mélange de 4,4'- et 2,4'-diphénylméthanedysocyanate à des températures de 0 à 30 degrés C et on trimérise ensuite à des températures jusqu'à 100 degrés C.

8. Procédé selon la revendication 6, caractérisé par le fait que l'on utilise, comme catalyseur de trimérisation un adduct d'un mol de tris-(dimethylaminopropyle)-s-hexahydrotriazine, un mol de 1,2-propylenoxyde et un mol d'acide 2-éthyl-hexanoïque, on effectue la trimérisation à des températures de 25 à 100 degrés C puis on laisse le mélange de réaction se refroidir sans désactiver le catalyseur de trimérisation.

9. Utilisation des mélanges de polyisoryanate contenant les groupes isocyanurate selon la revendication 1 pour la préparation de matières synthétiques de polyisocyanurate cellulaires ou compactes contenant du polyuréthane ou des groupes de polyuréthane.

10. Utilisation de mélanges de polyisocyanate de polyuréthanes alvéolaires durs ou polyisocyaménates alvéolaires contenant des groupes polyuréthane.

19